# EUROPEAN PATENT APPLICATION

(11) **EP 2 876 571 A1**
(43) Date of publication of application: **27.05.2015**
(21) Application number: 13306617.5
(22) Date of filing: 26.11.2013
(51) Int. Cl.: G06F 21/36

(54) **Method for authenticating a user by using an access code, corresponding terminal.**

(71) Applicant: Thomson Licensing, 92130 Issy-les-Moulineaux (FR)
(72) Inventor: Bauzin, Julien, 35 576 Cesson Sévigné (FR); Langlois, Tristan, 35 576 Cesson Sévigné (FR); Botta, Franck, 35 576 Cesson Sévigné (FR)
(74) Representative: Huchet, Anne

(57) **Abstract**

The invention concerns a terminal adapted for authenticating a user by an access code, said terminal being equipped with a keypad (K) comprising a plurality of cells (C), characterized in that:
- said access code is defined by a succession of N combinations of M concurrently selections of cells of the keypad (K), N and M being integers at least equal to 1;
- said terminal comprises a detector (D) adapted to identify said access code by parsing a succession of N combinations of M concurrently selections of cells input by a user at the keypad (K).

## Description

### FIELD OF THE INVENTION

The present invention generally relates to authentication processes to give access to a terminal or an application running on said terminal, notably used by different persons.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Access codes are commonly used in the usual life. They might be required in an authentication mechanism for web-sites, mobile phones, etc., but can also be required to protect access to sensitive information located, for instance, on a remote server.

In many cases, access codes are made of several digits that a user shall successively enter through a dedicated application, thanks to a real or virtual keypad.

In particular, it is already known to have access to a given application running on a client terminal (e.g. personal computer, a tablet, a smartphone, etc.) through an authentication process. During such an authentication process, a user can have to enter his(her) personal login into a dedicated window followed by his(her) personal access code at a virtual keypad appearing on the screen of the client terminal. The keypad is usually formed by a plurality of cells, each cell being identified by a figure, letter or any other character or the like.

Nevertheless, a drawback of such an authentication process relies on the fact that the user has to perform two distinct successive steps: one step of identification by providing a login and one additional step for the authentication by entering a personal access code.

The present invention attempts to remedy at least the above mentioned drawback.

### SUMMARY OF THE INVENTION

To this end, the invention concerns a method for authenticating a user comprising the step of entering an access code at a keypad of a terminal, said keypad comprising a plurality of cells,
which is remarkable in that said access code is defined by a succession of N combinations of M concurrently selections of cells, N and M being integers at least equal to 1 (and preferably at least equal to 2).

Thus, the present invention provides an easy way of identifying and/or authenticating of a user without, preferably, using a login (even if the latter can also be used).

In a preferred embodiment of the present invention, the cells of the keypad are devoid of any sign or mark.

In a further aspect of the present invention, said access code can further comprise at least one additional fake combination of cells. Such fake combination(s) can help to improve the security associated with the access code.

In particular, said fake combination of cells can be inserted at a predetermined position amongst the N combinations of cells of said access code.

As a variant or as a complement, the position of said fake combination of cells in said access code can also be undefined, to let the user choose where he/she wants to insert said fake combination.

In addition, the cells of said fake combination can be advantageously undefined, so that a fake combination can be performed by a user by selecting any cell(s) of the keypad. For the same fake combination, the associated cells may vary between two distinct uses of the access code.

In an illustrative example of the preferred embodiment, the cells of the keypad are arranged in rows and columns to define a grid.

In particular, in this example, the keypad comprises eight cells arranged in two rows and four columns. Obviously, any other appropriated cells arrangements can be considered without departing from the present invention.

Besides, the present invention also concerns a terminal adapted for authenticating a user by an access code, said terminal being equipped with a keypad (such as a virtual keypad or an hardware keypad) comprising a plurality of cells, characterized in that:
- said access code is defined by a succession of N combinations of M concurrently selections of cells of the keypad, N and M being integers at least equal to 1 (and preferably at least equal to 2);
- said terminal comprises a detector adapted to identify said access code by parsing a succession of N combinations of M concurrently selections of cells input by a user at the keypad.

Moreover, the cells of the keypad are preferably devoid of any sign or mark.

Advantageously, the access code can further comprise at least one additional fake combination of cells.

In addition, said access code comprising at least one additional fake combination of cells, said detector can further be configured for detecting said fake combination.

The present invention also concerns a computer program product downloadable from a communication network and/or recorded on a medium readable by computer and/or executable by a processor, comprising program code instructions for implementing the steps of the method as previously mentioned.

Besides, the present invention concerns a non-transitory program storage device, readable by a computer, tangibly embodying a program of instructions executable by the computer to perform the steps of the previously mentioned method.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

### BRIEF DESCRIPTION OF THE DRAWINGS

The invention will be better understood and illustrated by means of the following embodiment and execution examples, in no way limitative, with reference to the appended figures on which:
- Figure 1 is an exemplary of a mobile terminal wherein the method for identifying and authenticating according to the present invention might be implemented;
- Figure 2 is a flow chart illustrating the method for identifying and authenticating compliant with the present invention;
- Figure 3 illustrates a keypad displayed on a display interface of the mobile terminal of Figure 1;
- Figures 4A, 4B and 4C represent the successive combinations of cells defining an access code involved in the implementation of the method of Figure 2.

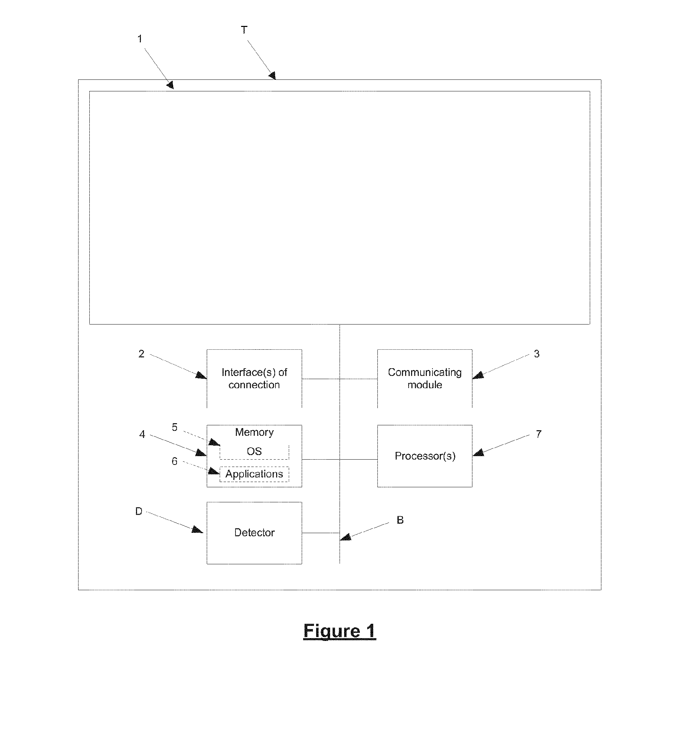

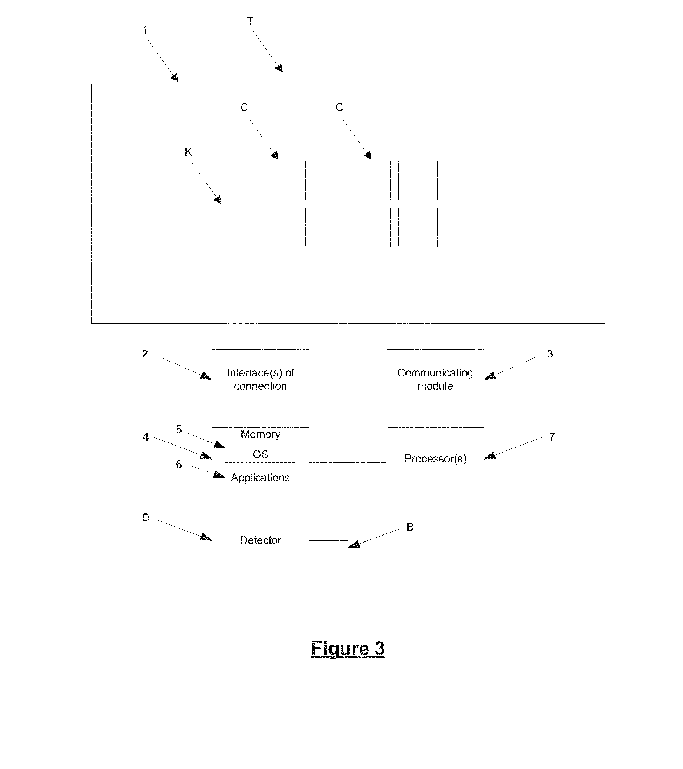

In Figures 1 and 3, some of the represented blocks are purely functional entities, which do not necessarily correspond to physically separate entities. Namely, they could be developed in the form of software, hardware, or be implemented in one or several integrated circuits, comprising one or more processors.

Wherever possible, the same reference numerals will be used throughout the figures to refer to the same or like parts.

### DETAILED DESCRIPTION OF PREFERRED EMBODIMENTS

It is to be understood that the figures and descriptions of the present invention have been simplified to illustrate elements that are relevant for a clear understanding of the present invention, while eliminating, for purposes of clarity, many other elements found in typical digital terminals.

As described above, the present disclosure provides an identification and authentication method that is operative in a mobile computing terminal T (such as smartphone, a tablet, a laptop, etc.) comprising a display interface 1. Naturally, said method might also be implemented in a fixed terminal (e.g. a personal computer).

In operation, the method according to the present invention operates to provide a user an access to a given application through the terminal T without using a personal login. In this manner, the user can identify him(her)self and authenticate simultaneously.

According to a preferred embodiment of the invention, as shown on Figure 1, the mobile terminal T is a smartphone or a touchpad, or the like, which comprises:
- one or more interfaces of connection 2 (wired and/or wireless, as for example Wi-Fi, Ethernet, etc.) to a Local Area Network (LAN) and/or Wide Area Network (WAN) as the Internet. Naturally, in a variant, the terminal T might be devoid of any interface of connection;
- a communication module 3 containing the protocol stacks to communicate with one or more other local or remote terminals belonging to a local or wide area network. In particular, the communication module 3 comprises the TCP/IP stack well known in the art. Of course, it could be any other type of network and/or communicating means enabling the mobile terminal T to communicate with such other terminals;
- a memory 4, which is represented for clarity reasons in the form of a single block, but comprises at one and the same time random-access memory, read-only memory and reprogrammable persistent memory (of example "Flash" type);
- an operating system 5 (e.g. Apple IOS or Google Android) and applications 6, which are stored in said memory 4;
- one or more processor(s) 7 (forming, for instance, a Central Processing Unit and/or a Graphic Processing Unit) for executing the applications and programs stored in the memory 4 of the terminal T;
- a touch-sensing interface 1 configured to receive input from a user's touch to be transferred to the processor(s) 7. In the preferred embodiment, the display interface and the touch-sensing interface formed the same element, so called touch screen (nevertheless, in a variant, the touch screen could be a separate and standalone element connected to the terminal T). In addition, the touch-screen 1 recognizes user's touches and, notably, the position of such touches. In operation, the touch screen 1 detects and reports the touches to the processor(s) 7 which then interprets said touches in accordance with its programming. The touch screen 1 can relies on different technologies, such as (without any limitation) capacitive sensing, resistive sensing, pressure sensing, optical sensing, and/or the like. According to the invention, the touch screen 1 is preferably based on multipoint sensing in order to distinguish multiple touches that occur at the same time on said touch screen 1. In another variant, the touch-sensing interface might be substituted by a well-known physical keyboard connected to the display interface;
- an internal bus B to connect the various modules and all means well known to the skilled in the art for performing the generic terminal functionalities.

As described above, the identification and authentication method M according to the present invention is operative in the terminal T of Figure 1.

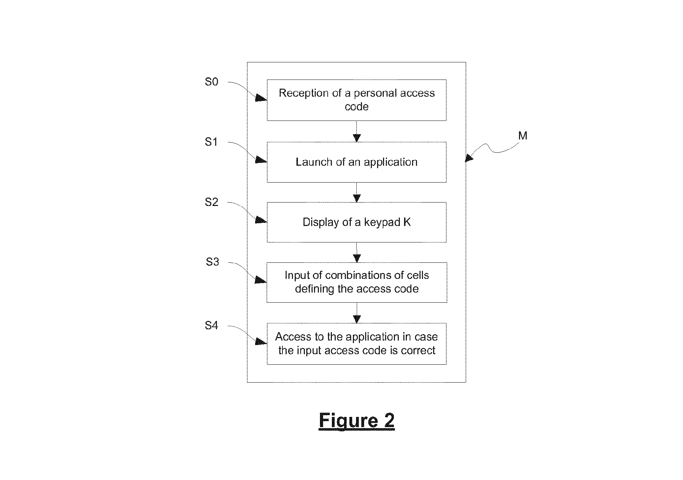

In particular, as illustrated on Figure 2, in order to both identify and authenticate a user wishing to use a given application stored on the terminal T and represented by a corresponding icon (not shown on the Figures) displayed on the touch screen 1, said user preliminary needs (step S0) to define him(her)self or to receive a personal access code.

In the preferred embodiment, said personal access code is preferably composed of a succession of N combinations of M cells, N and M being integers at least equal to 1, and advantageously at least equal to 2. In case the user receives his(her) personal access code, the latter might have been automatically generated.

In a further step S1, said given application is launched, for instance upon a user action (e.g. a touch on the corresponding icon displayed on the touch screen 1).

In a next step S2, in response to the launch of the application, a virtual keypad K appears on the touch screen 1 as represented on Figure 3. Said keypad K is preferably composed of a plurality of cells C arranged in rows and columns, while any other type of arrangement might be used without departing from the present invention.

As an illustrative, but non limitative, example depicted on Figure 3, the virtual keypad K comprises eight cells C, arranged in two rows and four columns to form a rectangular grid. It should be understood that the number and the arrangement of cells may differ, in a variant, from this illustrative example (e.g. a grid of four rows and three columns).

In the preferred embodiment, the cells are devoid of any sign. In a variant, each cell might be identified by a letter, a digit or an adapted character or the like.

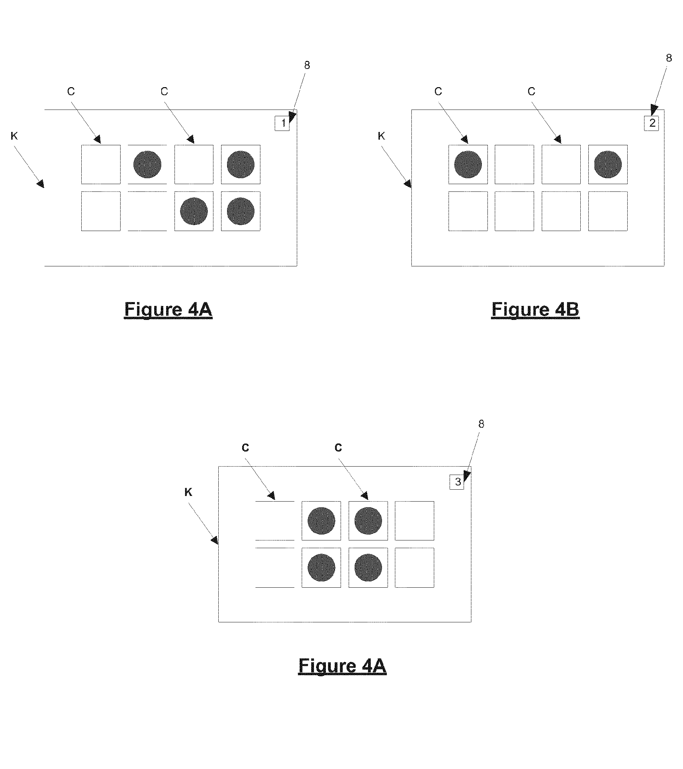

As an additional illustrative, but non limitative, example compliant with the preferred embodiment of invention and depicted on Figures 4A, 4B, and 4C, the personal access code can be defined by the succession of three combinations (i.e. N=3), wherein:
- the first combination (see Figure 4A) comprises the concurrent selection of four cells (i.e. M=4), the selected cells being identified by a filled circle on the Figures;
- the second combination (see Figure 4B) comprises the concurrent selection of two cells (i.e. M=2); and
- the third combination (see 'Figure 4C) comprises the concurrent selection of four cells (i.e. M=4), the selected four cells being - partially or entirely-distinct from the ones of the first combination.

Thus, in a further step S3, in order to both identify and authenticate, the user starts to enter his(her) personal access code by simultaneously touching the cells corresponding of the first combination (see Figure 4A). A detector D of the terminal T is configured for detecting and identifying each combination of cells forming the access code.

To accurately identify the selected cells of each combination of the access code, the corresponding touches on the keypad K should preferably be long enough. For instance, the cells of each combination can be concurrently touched during an adapted period of time (e.g. half-second). The selected cells might advantageously be shaded - at least during the touch - to let the user be aware of the cell selection.

Once the first combination has been input, the user enters the second combination defining the access code (see Figure 4B). To facilitate the distinction between successive combinations, a tag 8 (e.g. a number) might be associated with each combination and displayed on the virtual keypad K as shown on Figures 4A to 4C (e.g. in a dedicated window of the keypad). This tag can indicate the order of a given combination amongst all the combinations of the access code.

After the input of the second combination, the user enters the third and last combination of his(her) personal access code (see Figure 4C).

In case all combinations have been rightly entered, the user can have access to said given application (step S4) and, in case the user has already saved a personal profile, the latter might be automatically retrieved and loaded.

In a variant of the present invention, the identification and authenticating might be used to replace the unlock mechanism present on the terminal T, so that a user can simultaneously unlock the terminal T and have his(her) profile and/or session directly loaded.

Thus, thanks to the present invention, a user can simultaneously be identified and authenticated in an easy way.

As a refinement, the personal access code can comprise one or more fake combinations in addition to the N true combinations. Such fake combinations are advantageously inserted in the N true combinations of the personal access code. No predetermined cell is associated with a fake combination, so that the user can select any cells of the touchpad to perform the fake combination. Obviously, in a variant, a fake combination might be defined by the selection of predetermined cells.

According to said refinement, the user may know the position of these fake combinations within the N true combinations of the personal access code.

Thus, by considering the previous illustrative example wherein the personal access code is composed of three successive combinations, two fake combinations are inserted within said access code, for instance between the first and second true combinations and after the third true combination, respectively. In other words, an observer looking at the user entering his(her) personal access code will have the impression that said code comprises five successive combinations. Such fake combinations can improve the security of the personal access code.

In a variant of the said refinement, the user does not even need to know the position of the fake combinations amongst the N true combinations of his(her) personal access code. Indeed, the detector D of terminal T can identify the true combinations of cells amongst all the combinations of cells carried out by the user, for instance by comparing each combination with the N true combinations forming the personal access code. In this case, the last combination of the access code is preferably not a fake combination. As a consequence, the user only needs to memorize the N true combinations defining his(her) personal access code and the number of additional fake combinations.

Besides, the number of cells defining a combination of the access code is at most equal to the number of cells of the displayed keypad K and is preferably at most equal to ten (which is the total number of fingers of a user).

It might be appreciated that all available combinations of cells of the keypad are possible to define a combination of an access code compliant with the present invention.

Besides, the flowchart and/or block diagrams in the Figures illustrate the configuration, operation and functionality of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, or blocks may be executed in an alternative order, depending upon the functionality involved. It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions. While not explicitly described, the present embodiments may be employed in any combination or sub-combination.

As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro-code, and so forth), or an embodiment combining software and hardware aspects that can all generally be referred to herein as a "circuit," "module", or "system." Furthermore, aspects of the present principles can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a random access memory (RAM); a read-only memory (ROM); an erasable programmable read-only memory (EPROM or Flash memory); a portable compact disc read-only memory (CD-ROM); an optical storage device; a magnetic storage device; or any suitable combination of the foregoing.

## Claims

1. Method for authenticating a user comprising the step of entering an access code at a keypad (K) of terminal (T), said keypad (K) comprising a plurality of cells (C),
**characterized in that** said access code is defined by a succession of N combinations of M concurrently selections of cells, N and M being integers at least equal to 1.

2. Method according to claim 1, wherein the cells (C) of the keypad (K) are devoid of any sign or mark.

3. Method according to claim 1 or 2, wherein said access code further comprises at least one additional fake combination of cells (C).

4. Method according to claim 3, wherein said fake combination of cells (C) is inserted at a predetermined position amongst the N combinations of cells (C) of said access code.

5. Method according to claim 3, wherein the position of said fake combination of cells (C) in said access code is undefined.

6. Method according to any one of claims 3 to 5, wherein the cells (C) of said fake combination are undefined.

7. Method according to any one of claims 1 to 6, wherein the cells (C) of the keypad (K) are arranged in rows and columns to define a grid.

8. Method according to any one of claims 1 to 7, wherein the keypad (K) comprises eight cells arranged in two rows and four columns.

9. Terminal adapted for authenticating a user by an access code, said terminal being equipped with a keypad (K) comprising a plurality of cells (C), **characterized in that**:
- said access code is defined by a succession of N combinations of M concurrently selections of cells of the keypad (K), N and M being integers at least equal to 1;
- said terminal comprises a detector (D) adapted to identify said access code by parsing a succession of N combinations of M concurrently selections of cells input by a user at the keypad (K).

10. Terminal according to claim 9, wherein the cells (C) of the keypad (K) are devoid of any sign or mark.

11. Terminal according to claim 9 or 10, wherein said access code further comprises at least one additional fake combination of cells (C).

12. Terminal according to any one of claims 9 to 11, wherein, said access code comprising at least one additional fake combination of cells (C), said detector (D) is further configured for detecting said fake combination.

13. Computer program product downloadable from a communication network and/or recorded on a medium readable by computer and/or executable by a processor, comprising program code instructions for implementing the steps of a method according to at least one of claims 1 to 8.

14. Non-transitory program storage terminal, readable by a computer, tangibly embodying a program of instructions executable by the computer to perform the steps of a method according to at least one of claims 1 to 8.
